# EUROPÄISCHE PATENTSCHRIFT

(11) **EP 2 790 341 B1**
(45) Veröffentlichungstag und Bekanntmachung des Hinweises auf die Patenterteilung: **22.03.2023**
(21) Anmeldenummer: 13162751.5
(22) Anmeldetag: 08.04.2013
(51) Int. Cl.: H04J 14/02

(54) **Verfahren zum Multiplexen und/oder Demultiplexen und optisches Netzelement**
Method for multiplexing and/or demultiplexing and optical network element
Procédé de multiplexage et/ou démultiplexage et élément de réseau optique

(43) Veröffentlichungstag der Anmeldung: 15.10.2014
(73) Patentinhaber: Deutsche Telekom AG, 53113 Bonn (DE)
(72) Erfinder: Gunkel, Matthias, 64291 Darmstadt (DE); Leppla, Ralph, 64404 Bickenbach (DE); Weiershausen, Werner, 64859 Eppertshausen (DE); Würtenberger, Werner, 64853 Otzberg (DE)
(74) Vertreter: Blumbach · Zinngrebe Patentanwälte PartG mbB

(56) Entgegenhaltungen:
- EP-A1- 1 324 523
- WO-A1-2004/109958
- US-A1- 2005 213 879
- US-A1- 2010 129 076
- US-A1- 2013 045 006
- Anonymous: "Optical filter - Wikipedia", , 22 February 2013 (2013-02-22), XP055534534, Retrieved from the Internet: URL:https://en.wikipedia.org/w/index.php?t itle=Optical_filter&oldid=539690612 [retrieved on 2018-12-14]

## Beschreibung

Die Erfindung betrifft allgemein die Datenübertragung mittels optischer Signale, und insbesondere ein Verfahren zum Multiplexen und/oder Demultiplexen eines optischen Wellenlängenmultiplexsignals sowie ein optisches Netzelement zum Einsatz in einem im Wellenlängen-Multiplexbetrieb betriebenen optischen Übertragungsnetz mit einer Mehrzahl von Netzknoten, welche mittels optischer Übertragungsstrecken miteinander verbunden sind.

Auf Glasfaser-gebundenen Weitverkehrsstrecken wird heute Wellenlängenmultiplex (Wavelength Division Multiplex, WDM) angewendet. Im ITU-T Standard G.694.1 werden hierzu unter anderem Mittenfrequenzen im Abstand von 100 GHz und 50 GHz definiert. Obwohl die Datenraten pro Wellenlänge in den letzten Jahren immer größer wurden, konnten Verfahren entwickelt werden, die es erlauben, dass alle bisher kommerziell verfügbaren Datenraten in diese Frequenzraster passen. In aktuellen Transportsystemen werden beispielsweise bis zu 100 Gbit/s durch einen WDM-Kanal mit der festen Breite von 50 GHz über mehr als 1000 km weit übertragen, um damit die Transportkapazität der Glasfaser möglichst gut auszunutzen. Die WDM-Kanäle werden durch passive WDM-Multiplexer definiert. Daraus ergibt sich auch, dass die spektralen Kanalbreiten und ihre Mittenfrequenzen fest vorgegeben sind. Zwischen den Kanälen liegen spektral schmale Bereiche mit sehr hoher Einfügedämpfung. Aufgrund dieser Dämpfungsbereiche, in denen keine optische Leistung transportiert wird, können die Kanäle empfängerseitig in passiven WDM-Demultiplexern wieder getrennt werden. Multiplexer und Demultiplexer bestehen dabei in der Regel aus identischen Bauelementen.

Aus Sicht eines Netzbetreibers liegt oftmals eine komplexe Netzplanungssituation vor, d.h. die Bedarfe treten aus Planungssicht nicht unmittelbar vorhersehbar auf. Das jeweilige Verkehrsvolumen zwischen einem Start- und Zielknotenpaar wächst üblicherweise stetig an, das genaue Wachstum ist dabei eine eher statistische Größe. Nach der Einrichtung einer Verbindung bleibt diese dann in der Regel über einen längeren Zeitraum von mehreren Monaten oder sogar Jahren bestehen. Weitere Wellenlängen kommen über der Zeit hinzu.

Der Gesamttransportbedarf wächst schon seit vielen Jahren stetig an. Parallel dazu gibt es einen Trend zu immer größeren Kanaldatenraten. Daher kann als annähernd sicher angenommen werden, dass es nach der kommerziellen Einführung von Schnittstellen mit 10 Gbit/s, 40 Gbit/s und 100 Gbit/s pro Wellenlänge auch zur Kommerzialisierung von Transportlösungen mit 400 Gbit/s pro Wellenlänge kommen wird.

Eine Möglichkeit zur Realisierung einer solchen Datenrate könnte darin bestehen, ein Overlay-Netz aufzubauen, sobald 400 Gbit/s transportiert werden müssen. Dieser Ansatz wäre aber sehr kostenintensiv. Aus Sicht eines Netzbetreibers ist daher ein Overlay-Netz zu vermeiden.

Vielmehr ist es wünschenswert, Netzelemente bereitzustellen, die es erlauben, Datenraten von 400 Gbit/s zusammen mit bestehenden Datenraten über dasselbe Netz zu übertragen.

Bisherige wissenschaftliche Analysen zeigen, dass man zukünftig auf Schwierigkeiten stoßen wird, Datenraten von 400 Gbit/s über Kanäle mit einem festen 50 GHz Kanalraster zu übertragen, da die Reichweite von 400 Gbit/s in einem engen 50 GHz Raster gegenüber den heute üblichen Reichweiten dramatisch reduziert ist.

Die nächste zukünftige Datenrate oberhalb von 100 Gbit/s wird voraussichtlich 400 Gbit/s sein, aber auch über 1 Tbit/s wird bereits nachgedacht. Diese Datenraten verlangen nach spektral noch breiteren Kanälen als die heute üblichen 50 GHz bzw. 100 GHz, will man in der Glasfaser Entfernungen von einigen 100 km überwinden. Viele Systemhersteller und Forschungseinrichtungen gehen von einer Bandbreite von ca. 75 - 87,5 GHz für einen Kanal mit einer Datenrate von 400 Gbit/s und ca. 150 - 200 GHz für einen Kanal mit einer Datenrate von 1 Tbit/s aus. Eine wichtige Voraussetzung ist es, dass diese spektrale Bandbreite zusammenhängend ist und keine spektralen Bereiche mit hoher Dämpfung, wie bei passiven Mux/Demux-Filtern üblich, aufweist.

Zur Lösung werden momentan sogenannte "flexgrid" Ansätze weltweit intensiv diskutiert, welche durch die Entwicklung sogenannter "flexgrid" oder "gridless" WSS (Wellenlängen-selektiver Schalter; Wavelength Selective Switch) ermöglicht werden. Diese aktiven Bauelemente sind Wellenlängen-selektive Schalter ohne starr vorgegebenes Wellenlängen-Raster, die beispielsweise auf der der Konsumerelektronik entstammenden LCoS-Technologie (Liquid Crystal on Silicon) oder DLP-Technologie (Digital Light Processing) basieren und die in ihren spektralen Eigenschaften auf einer Granularität von bis zu wenigen GHz beliebig gesteuert werden können, so dass spektrale Schaltfenster in einem weiten Rahmen elektronisch konfigurierbar sind.

Für die nächste Datenrate von 400 Gbit/s müsste ein LcoSbasierter flexgrid WSS somit WDM-Kanäle von ca. 75 - 87,5 GHz definieren, um eine einzelne Glasfaserstrecke optimal auszunutzen. Gegenüber einem technisch ebenfalls möglichen 100 GHz Kanalraster, das bei etwas älteren Systemen über viele Jahre hinweg eingesetzt wurde, kann dadurch die Gesamtkapazität um ca. 10 - 30 % erhöht werden. Dies gilt jedoch nur für Transportsysteme, die ausschließlich mit 400 Gbit/s über optimal daran angepasste Kanalbandbreiten betrieben würden.

Sollen mit Hilfe spektral flexibel konfigurierbarer Wellenlängen-selektiver Schalter für einen Migrationspfad verschiedene Datenraten, wie beispielsweise 10 Gbit/s, 40 Gbit/s und 100 Gbit/s, jeweils an die Verkehrslast angepasst, in einem Netz gemischt werden, was ja die oben erläuterten Kostenvorteil für den Netzbetreiber mit sich bringt, und soll einem optisch transparenten Netzansatz gefolgt werden, so müssten die Kanalbandbreiten flexibel über das Spektrum verteilt werden können. Bei optischer Transparenz, d.h. einer Vermeidung von OEO-Konversionen in den Netzknoten, reduziert sich der mögliche Kapazitätsgewinn, weil es auf den verschiedenen Streckenabschnitten zu spektralen Fragmentierungen und daraus resultierend mit wachsendem Verkehrsvolumen zu Wellenlängenblockierungen kommt.

Optisch transparente Netze werden mit rekonfigurierbaren optischen Add/drop-Multiplexern (Reconfigurable Optical Add/Drop Multiplexer, ROADM) zur Verschaltung auf der Wellenlängenebene ausgestattet, wobei im Transitpfad eines ROADMs der Einsatz Wellenlängen-selektiver Schalter derzeit die am besten geeignete Lösung darstellt.

Wellenlängen-selektive Schalter werden im Transitpfad eines ROADMs eingesetzt, wobei zu diesem Zweck aus heutiger Sicht 1x9 Schalter für die nähere Zukunft ausreichend sind. Weil ein WSS jeweils ganze WDM-Spektren am Eingang bzw. Ausgang gleichzeitig verarbeitet, stellt auch die technisch aufwendigere, und damit auch etwas teurere, Variante eines flexgrid WSS, d.h. eines spektral flexibel konfigurierbaren Wellenlängen-selektiven Schalters, für zukünftige Datenraten von 400 Gbit/s keine Hürde für einen kommerziellen Einsatz dar.

Add/drop-Ports eines ROADMs stellen sozusagen die Ein- und Ausgangstore zum ROADM und damit zum Netz dar. Auch dort können Wellenlängen-selektive Schalter gewinnbringend eingesetzt werden. Im Empfangsweg haben sie üblicherweise die Aufgabe, aus einem WDM-Spektrum am Eingang einzelne Kanäle an den jeweiligen Ausgangsports herauszufiltern, bzw. in umgekehrter Flussrichtung, also in Senderichtung, einzelne WDM-Kanäle zu einem WDM-Spektrum zusammenzusetzen. Für eine hinreichende Add/drop-Kapazität werden WSS-Lösungen mit 1x20 bzw. 1x23 Ports entwickelt. Typischerweise wird an jedem Port nur jeweils ein einzelner WDM-Kanal verarbeitet, so dass der Einsatz Wellenlängen-selektiver Schalter für die Add/drop-Ports eines ROADMs sehr kostenaufwendig ist.

In den letzten Jahren kamen Schnittstellen auf, die auf kohärenten optischen Empfangsmechanismen basieren. Bei ihnen ist es möglich, mehrere Schnittstellen über den gleichen WSS-Port zu betreiben. Die finale Kanalselektivität wird hierbei durch das Tuning des Lokallasers im Empfänger ermöglicht. Die Anzahl parallel betreibbarer Schnittstellen ist allerdings auf einige wenige begrenzt, weil sich sonst unvermeidbare Rauscheffekte bemerkbar machen und die Reichweite begrenzen.

Wie oben beschrieben, können Datenraten von 400 Gbit/s mit Hilfe spektral flexibel konfigurierbarer Wellenlängen-selektiver Schalter realisiert werden. Diese müssten dann auch im Add/drop-Pfad verwendet werden. Spektral flexibel konfigurierbare Wellenlängen-selektive Schalter sind jedoch aufwendiger als Wellenlängen-selektive Schalter mit einem festen Wellenlängenraster. Dies drückt sich in einem höheren Kostenaufwand von heute ca. 25% aus. Zudem müssten für eine hinreichende Add/drop-Kapazität mehrere der heute verfügbaren flexgrid WSS mit maximal 1x9 Ports kaskadiert werden oder deutlich aufwendigere flexgrid WSS mit 1x20 bzw. 1x23 Ports eingesetzt werden, sobald diese kommerziell verfügbar sind. Für flexgrid WSS mit 1x20 bzw. 1x23 Ports als Premiumprodukte ist mit einem hohen Kostenaufwand zu rechnen.

Aus WO 2004/109958 A1 ist eine MUX/DEMUX-Architektur mit flexiblen Bändern bekannt, welche die Koexistenz mehrerer unterschiedlicher Kanalpläne innerhalb eines gemeinsamen optischen Kommunikationsnetzes ermöglicht, wobei eine grobe Demultiplexerschicht zwei oder mehr Spektralbänder von einem optischen Breitband-WDM-Signal trennt und eine feine Demultiplexerschicht die jeweiligen Kanäle jedes Spektralbandes trennt. Ferner wird in US 2010/129076 A1 ein Verfahren und eine Vorrichtung zum selektiven Schalten von Bändern in einem optischen Trägersignal beschrieben. Aus US 2013/0045006 A1 sind ein Verfahren und ein System zur Verbesserung der Bandbreiteneffizienz in einem optischen Netzwerk bekannt, wobei ungenutzte Bandbreite, die sich um vorläufig zugewiesene optische Kanäle herum befindet, dynamisch genutzt wird.

Es ist die Aufgabe der vorliegenden Erfindung, einen Weg aufzuzeigen, wie die oben beschriebenen Probleme im Stand der Technik reduziert oder vermieden werden können, und insbesondere einen Weg aufzuzeigen, wie auf einfache Weise ein Migrationspfad realisiert werden kann, welcher es auch für derzeitige optische Übertragungsnetze ermöglicht, höhere Datenraten von zum Beispiel 400 GBit/s oder 1 TBit/s über akzeptable Reichweiten zu übertragen.

Diese Aufgabe wird durch die Merkmale der unabhängigen Ansprüche gelöst. Vorteilhafte Ausführungsformen sind Gegenstand der abhängigen Ansprüche.

Ein erfindungsgemäßes Verfahren dient zum Multiplexen und/oder Demultiplexen eines optischen Wellenlängenmultiplexsignals und kann insbesondere in einem im Wellenlängen-Multiplexbetrieb betriebenen optischen Übertragungsnetz mit einer Mehrzahl von Netzknoten, welche mittels optischer Übertragungsstrecken miteinander verbunden sind, eingesetzt werden. Insbesondere kann das Verfahren in einem Add- und/oder Drop-Pfad eines rekonfigurierbaren optischen Add/Drop-Multiplexers (ROADM) eingesetzt werden.

Das Multiplexen wird insbesondere zum sendeseitigen Kombinieren von an Add-Ports bereitgestellten optischen Signalen zu einem Wellenlängenmultiplexsignal und das Demultiplexen zum empfangsseitigen Aufteilen eines Wellenlängenmultiplexsignals in einzelne an Drop-Ports bereitzustellende optische Signale eingesetzt.

Zum Multiplexen umfasst das Verfahren das Bereitstellen eines ersten und wenigstens eines zweiten optischen Datensignals, wobei diese optischen Datensignale insbesondere an entsprechenden Add-Eingangs-Ports eines ROADM bereitgestellt werden. Ferner umfasst das Verfahren das Kombinieren der ersten und zweiten optischen Signale zu einem optischen Wellenlängenmultiplexsignal, welches in wenigstens einem ersten Wellenlängenbereich erste Wellenlängenkanäle mit Kanalabständen gemäß eines vorgegebenen ersten Wellenlängenrasters und in wenigstens einem zweiten Wellenlängenbereich zweite Wellenlängenkanäle mit Kanalabständen gemäß eines vorgegebenen zweiten, vom ersten unterschiedlichen Wellenlängenrasters umfasst, wobei die Wellenlänge des ersten optischen Datensignals einem der ersten Wellenlängenkanäle und die Wellenlänge des zweiten optischen Datensignals einem der zweiten Wellenlängenkanäle entspricht.

Alternativ oder zusätzlich umfasst das Verfahren in analoger Weise zum Demultiplexen das Bereitstellen eines optischen Wellenlängenmultiplexsignals, welches in wenigstens einem ersten Wellenlängenbereich erste Wellenlängenkanäle mit Kanalabständen gemäß eines vorgegebenen ersten Wellenlängenrasters und in wenigstens einem zweiten Wellenlängenbereich zweite Wellenlängenkanäle mit Kanalabständen gemäß eines vorgegebenen zweiten, vom ersten unterschiedlichen Wellenlängenrasters umfasst, sowie das Aufteilen des optischen Wellenlängenmultiplexsignals in separate, jeweils einem der ersten und zweiten Wellenlängenkanäle entsprechenden optischen Datensignale, welche insbesondere an entsprechenden Drop-Ausgangs-Ports des ROADM bereitgestellt werden.

In einer besonders bevorzugten Ausführungsform ist das erste Wellenlängenraster ein 50 GHz-Raster und das zweite Wellenlängenraster ein 100 GHz-Raster. Die Erfindung ist jedoch nicht auf diese Wellenlängenraster beschränkt, sowie auch nicht auf die Verwendung von nur zwei unterschiedlichen Wellenlängenrastern. Es kann vielmehr auch ein Wellenlängenmultiplexsignal erzeugt werden, welche mehr als zwei Wellenlängenbereiche mit jeweils unterschiedlichen Wellenlängenrastern aufweist. Anzahl und Art der verwendeten Wellenlängenraster können je nach Bedarf und Einsatzzweck gewählt werden.

Zum Multiplexen sieht das Verfahren vor, mittels eines ersten passiven optischen Elementes eine Mehrzahl erster optischer Datensignale, deren Wellenlängen jeweils einem der ersten Wellenlängenkanäle entsprechen, zu einem ersten Teil-Multiplexsignal zu kombinieren und mittels eines zweiten passiven optischen Elementes eine Mehrzahl zweiter optischer Datensignale, deren Wellenlängen jeweils einem der zweiten Wellenlängenkanäle entsprechen, zu einem zweiten Teil-Multiplexsignal zu kombinieren. Das erste Teil-Multiplexsignal umfasst dementsprechend Wellenlängenkanäle mit Kanalabständen gemäß dem ersten Wellenlängenraster und das zweite Teil-Multiplexsignal Wellenlängenkanäle mit Kanalabständen gemäß dem zweiten Wellenlängenraster. Das Wellenlängenmultiplexsignal wird dann mittels eines dritten optischen Elementes durch Kombinieren des ersten und zweiten Teil-Multiplexsignals erzeugt.

Analog ist zum Demultiplexen vorteilhaft alternativ oder zusätzlich vorgesehen, ein entsprechendes Wellenlängenmultiplexsignal mittels eines mit dem oben beschriebenen dritten optischen Element korrespondierenden optischen Element zunächst in ein erstes und ein zweites Teil-Multiplexsignal aufzuteilen und diese dann mittels passiver optischer Elemente, welche vorzugsweise identisch aufgebaut sind wie die in Multiplex-Richtung eingesetzten ersten und zweiten optischen Elemente, in separate optische Datensignale aufzuteilen und diese an Drop-Ports bereitzustellen.

Ein Grundgedanke der Erfindung besteht somit darin, in einem WDM-basierten transparenten optischen Übertragungssystem in einem Multiplexsignal unterschiedliche feste Wellenlängenraster zu kombinieren und zu diesem Zweck im Add/Drop-Pfad eines ROADM mehrere passive Multiplex-Filter einzusetzen, um auf effiziente Weise und mittels einfacher und kostengünstiger Komponenten verschiedene Datenraten in einem optischen Datenübertragungsnetz mit optisch transparentem Netzansatz zu mischen und so insbesondere einen Migrationspfad zu höheren Datenraten für bestehende Netze zur Verfügung zu stellen.

In einer besonders bevorzugten Ausführungsform werden die ersten optischen Datensignale als eine erste und zweite Gruppe optischer Datensignale bereitgestellt und durch Kombinieren der Signale der jeweiligen Gruppe ein erstes und zweites Gruppen-Multiplex-Signal erzeugt, wobei das erste und zweite Gruppen-Multiplexsignal Wellenlängenkanäle mit Kanalabständen gemäß des vorgegebenen zweiten Wellenlängenrasters umfassen. Dementsprechend ist vorzugsweise der Kanalabstand im ersten und zweiten Gruppen-Multiplex-Signal größer als die Kanalbreite, insbesondere etwa doppelt so groß.

Das Kombinieren des ersten und zweiten Gruppen-Multiplexsignals zu dem ersten Teil-Multiplexsignal erfolgt vorzugsweise mittels eines optischen Interleaver-Elementes, welches eine Verschränkung der Wellenlängenkanäle des ersten und zweiten Gruppen-Multiplexsignals bewirkt.

Es sind verschiedene Designs für optische Interleaver bekannt. Dementsprechend kann das optische Interleaver-Element beispielsweise mittels doppelbrechender Kristalle oder mittels Interferometern aufgebaut sein. Besonders vorteilhaft ist die Verwendung von Mach-Zehnder- oder Fabry-Perot-Interferometern.

Diese Ausführungsform des Verfahrens ermöglicht den Einsatz passiver Multiplex-/Demultiplex-Filter mit einem gröberen Wellenlängenraster, welche technisch einfacher zu realisieren sind und sich somit auch der Kostenaufwand reduziert. Beispielsweise kann statt eines passiven Multiplex-/Demultiplex-Filters mit 50 GHz Kanalabstand eine Kombination aus zwei passiven Multiplex-/Demultiplex-Filtern mit 100 GHz Kanalabstand in Verbindung einem optischen Interleaver-Element eingesetzt werden.

Das dritte optische Element, mittels dessen das Kombinieren des ersten und zweiten Teil-Multiplexsignals zu dem Wellenlängenmultiplexsignal erfolgt, ist als abstimmbares Kantenfilterelement ausgebildet, welches besonders bevorzugt ein Wellenlängenmultiplexsignal erzeugt, in dem die ersten Wellenlängenkanäle in einem ersten zusammenhängenden Wellenlängenbereich und die zweiten Wellenlängenkanäle in einem zweiten zusammenhängenden, mit dem ersten zusammenhängenden Wellenlängenbereich nicht überlappenden, Wellenlängenbereich angeordnet sind.

In einer alternativen beispielhaften Ausgestaltung erfolgt das Kombinieren des ersten und zweiten Teil-Multiplexsignals zu dem Wellenlängenmultiplexsignal mittels eines spektral flexibel konfigurierbaren Wellenlängen-selektiven Schalters mit zwei Eingangs- und einem Ausgangs-Port. Der Einsatz eines WSS ermöglicht das Erzeugen eines Wellenlängenmultiplexsignals, in welchem die ersten Wellenlängenkanäle auf mehrere, nicht zusammenhängende erste Wellenlängenbereiche und die zweiten Wellenlängenkanäle auf mehrere, nicht zusammenhängende zweite Wellenlängenbereiche verteilt sind, wobei die ersten und zweiten Wellenlängenbereiche nicht überlappen.

Mittels des Wellenlängen-selektiven Schalters kann zudem mit besonderem Vorteil eine Angleichung der Signalleistungen der individuellen Wellenlängenkanäle im Wellenlängenmultiplexsignal durchgeführt werden, auch als Power Balancing bezeichnet. Ein Power-Balancing kann auch mittels eines weiteren, im Transitpfad eines ROADM angeordneten WSS erfolgen.

Ein erfindungsgemäßes optisches Netzelement zum Einsatz in einem im Wellenlängen-Multiplexbetrieb betriebenen optischen Übertragungsnetz ist als ROADM ausgebildet und dazu ausgebildet, wenigstens ein erstes und wenigstens ein zweites optisches Signal zu einem optischen Wellenlängenmultiplexsignal zu kombinieren, welches in wenigstens einem ersten Wellenlängenbereich erste Wellenlängenkanäle mit Kanalabständen gemäß eines vorgegebenen ersten Wellenlängenrasters und in wenigstens einem zweiten Wellenlängenbereich zweite Wellenlängenkanäle mit Kanalabständen gemäß eines vorgegebenen zweiten, vom ersten unterschiedlichen Wellenlängenrasters umfasst, wobei die Wellenlänge des ersten optischen Datensignals einem der ersten Wellenlängenkanäle und die Wellenlänge des zweiten optischen Datensignals einem der zweiten Wellenlängenkanäle entspricht.

Alternativ oder zusätzlich ist das optische Element dazu ausgebildet, ein optisches Wellenlängenmultiplexsignal, welches in wenigstens einem ersten Wellenlängenbereich erste Wellenlängenkanäle mit Kanalabständen gemäß eines vorgegebenen ersten Wellenlängenrasters und in wenigstens einem zweiten Wellenlängenbereich zweite Wellenlängenkanäle mit Kanalabständen gemäß eines vorgegebenen zweiten, vom ersten unterschiedlichen Wellenlängenrasters umfasst, in separate, jeweils einem der ersten und zweiten Wellenlängenkanäle entsprechenden optischen Datensignale aufzuteilen.

Zu diesem Zweck umfasst das optische Netzelement ein erstes optisches Element zum Kombinieren einer Mehrzahl erster optischer Datensignale zu einem ersten Teil-Multiplexsignal, ein zweites optisches Element zum Kombinieren einer Mehrzahl zweiter optischer Datensignale zu einem zweiten Teil-Multiplexsignal, und ein drittes optisches Element zum Kombinieren des ersten und zweiten Teil-Multiplexsignals zu dem Wellenlängenmultiplexsignal.

Vorzugsweise ist das erste optische Element als passiver optischer Multiplexer mit einem Kanalabstand gemäß dem ersten Wellenlängenraster und das zweite optische Element als passiver optischer Multiplexer mit einem Kanalabstand gemäß dem zweiten Wellenlängenraster ausgebildet. Vorzugsweise ist das erste und das zweite optische Element als AWG (Arrayed Waveguide Grating) ausgebildet, wobei in einer bevorzugten Ausführungsform das erste optische Element ein 50 GHz-AWG und das zweite optische Element ein 100 GHz-AWG ist.

In einer weiteren bevorzugten Ausführungsform umfasst das erste optische Element einen ersten und einen zweiten passiven optischen Multiplexer mit einem Kanalabstand gemäß dem zweiten Wellenlängenraster, und ein mit den Ausgängen des ersten und zweiten passiven optischen Multiplexers verbundenes optisches Interleaver-Element. Auf diese Weise kann beispielsweise statt eines 50 GHz-AWG eine Kombination aus zwei 100 GHz-AWGs und einem optischen Interleaver-Element vorgesehen sein. Dies ist von Vorteil, da diese Komponenten technisch einfacher herstellbar sind. Das optische Interleaver-Element bewirkt eine Verschränkung der in den Eingangssignalen enthaltenen Wellenlängenkanäle, auch als Interleaving bezeichnet.

Das dritte optische Element ist als abstimmbares Kantenfilterelement ausgebildet, welches die Signalanteile eines ersten optischen Eingangssignals oberhalb einer elektronisch einstellbaren Kantenfrequenz mit den Signalanteilen eines zweiten optischen Eingangssignals unterhalb der Kantenfrequenz zu einem optischen Ausgangssignal kombiniert.

Die Kantenfrequenz des Kantenfilterelement ist vorteilhaft elektronisch abstimmbar, so dass der Wellenlängenbereich des Wellenlängenmultiplexsignals, in welchem die ersten Wellenlängekanäle mit Kanalabständen gemäß des ersten Wellenlängenrasters, und der Wellenlängenbereich des Wellenlängenmultiplexsignals, in welchem die zweiten Wellenlängekanäle mit Kanalabständen gemäß des zweiten Wellenlängenrasters, je nach Bedarf angepasst, d.h. vergrößert bzw. verkleinert werden kann.

Sind beispielsweise zwei Wellenlängenbereiche mit einem 50 GHz- und einem 100 GHz-Raster vorgesehen, so kann bei einem höheren Bedarf an Wellenlängenkanälen niedriger Datenrate der Wellenlängenbereich mit 50 GHz-Raster durch Verändern der Kantenfrequenz vergrößert und der Wellenlängenbereich mit 100 GHz-Raster dementsprechend verkleinert werden. Besteht hingegen ein höherer Bedarf an Wellenlängenkanälen höherer Datenrate, zum Beispiel 400 GBit/s, so kann dementsprechend durch Verändern der Kantenfrequenz des Kantenfilterelementes der Wellenlängenbereich mit 100 GHz-Raster vergrößert werden. Vorteilhaft ist hierzu, dass die Wellenlängenbereiche im Netzbetrieb sinnvoll vergeben werden, d.h. dass zum Beispiel Wellenlängenkanäle höherer Datenrate spektral immer links, d.h. bei niedrigeren Wellenlängen, und Wellenlängenkanäle geringerer Datenrate immer rechts, d.h. bei höheren Wellenlängen, angeordnet werden.

Bei Verwendung eines Kantenfilterelementes wird ein Wellenlängenmultiplexsignal erzeugt, in dem die ersten Wellenlängenkanäle in einem ersten zusammenhängenden Wellenlängenbereich und die zweiten Wellenlängenkanäle in einem zweiten zusammenhängenden, mit dem ersten zusammenhängenden Wellenlängenbereich nicht überlappenden, Wellenlängenbereich angeordnet sind.

Es kann jedoch für den Betrieb des Übertragungsnetzes vorteilhaft sein, dass sich mehrere Wellenlängenbereiche mit Wellenlängenkanälen mit Kanalabständen gemäß des ersten Wellenlängenrasters und mehrere Wellenlängenbereiche mit Wellenlängenkanälen mit Kanalabständen gemäß des zweiten Wellenlängenrasters abwechseln.

Dies wird gemäß einer beispielhaften Ausgestaltung ermöglicht, indem als drittes optisches Element ein spektral flexibel konfigurierbarer Wellenlängen-selektiver Schalter (WSS) eingesetzt wird. Für diesen Zweck wird lediglich ein 1x2 WSS benötigt, welcher technisch einfacher realisierbar und kostengünstiger ist als die im Stand der Technik erforderlichen 1x9, 1x20 oder 1x23 WSS.

Eine Verteilung der Wellenlängenkanäle unterschiedlicher Kanalbreite auf das Spektrum wird vorteilhaft auch dadurch erleichtert, dass der WSS dazu ausgebildet ist, eine Angleichung der Signalleistungen der individuellen Wellenlängenkanäle im Ausgangssignal zu bewirken.

Eine langfristige Kompatibilität mit elastischen Flexgrid-Ansätzen ist gewährleistet, da der WSS als spektral flexibel konfigurierbarer Wellenlängen-selektiver Schalter ausgebildet ist.

Im Rahmen der Erfindung liegt ferner ein für einen Wellenlängen-Multiplexbetrieb ausgebildetes optisches Übertragungsnetz mit einer Mehrzahl von Netzknoten, welche mittels optischer Übertragungsstrecken miteinander verbunden sind, bei dem wenigstens ein Netzknoten ein optisches Netzelement wie oben beschrieben umfasst oder als solches ausgebildet ist.

Es sei noch angemerkt, dass auch Ausführungsformen des Verfahrens und des optischen Netzelementes im Rahmen der Erfindung liegen, die analog zu den oben hinsichtlich der Multiplex-Richtung beschriebenen Ausführungsformen die entsprechende Demultiplex-Richtung realisieren. In diesen analogen Ausführungsformen sind insbesondere analoge Verfahrensschritte für das Multiplexen und Demultiplexen, sowie vorzugsweise identische optische Komponenten für die Multiplex- und die Demultiplex-Richtung vorgesehen.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines beispielhaften, als ROADM ausgebildeten optischen Netzelementes,
- Fig. 2: eine schematische Darstellung des Add-Pfads des in Fig. 1 dargestellten ROADM,
- Fig. 3: eine schematische Darstellung eines in dem in Fig. 2 dargestellten Add-Pfad erzeugten Wellenlängenmultiplex-Signals,
- Fig. 4: eine schematische Darstellung einer zur Erläuterung dienenden beispielhaften Alternative des in Fig. 2 dargestellten Add-Pfads, und
- Fig. 5: eine schematische Darstellung eines in dem in Fig. 4 dargestellten Add-Pfad erzeugten Wellenlängenmultiplex-Signals.

Die Erfinder haben erkannt, dass, um spektrale Fragmentierungen in einem Netzbetrieb gering zu halten, speziell wenn die Dienste zukünftig immer dynamischer werden sollten, sehr feine Schaltgranularitäten im Wellenlängenplan vermieden werden sollten. Auch aus Netzmanagement-Sicht ist es sinnvoll, eine gewisse Ordnung im Spektrum auf der Glasfaser zu erzielen, beispielsweise durch ein WDM-Raster, das nur aus 50 GHz bzw. 100 GHz breiten Kanälen besteht. Im dargestellten Ausführungsbeispiel wird davon ausgegangen, dass die spektrale Granularität 50 GHz beträgt, aus der dann zusammenhängende Kanäle definiert werden.

Verglichen mit einem bandbreitenoptimierten flexgrid-Ansatz werden dadurch einige Prozent Transportkapazität der Glasfaser verschenkt. Andererseits wird die RSA-Komplexität beträchtlich reduziert. Zudem können flexgrid WSS mit einer gröberen Schaltgranularität generell technisch einfacher und damit kostengünstiger hergestellt werden.

Es wird daher festgelegt, Datenraten von 400 Gbit/s in Wellenlängenkanälen mit einer Kanalbandbreite von 100 GHz zu übertragen und auf die letzten Prozentpunkte an spektraler Effizienz zu verzichten. Dies ermöglicht ein einfacheres Netzmanagement und berücksichtigt die Tatsache, dass für das klassische 100 GHz Kanalraster entsprechende Komponenten kostengünstig und marktreif schon seit längerer Zeit verfügbar sind.

Zukünftige Datenraten von 400 Gbit/s können also mit klassischen passiven Mux/Demux-Filtern mit einem Raster von 100 GHz sehr preiswert realisiert werden. Diese Filterstrukturen werden bevorzugt mit Arrayed Waveguide Gratings (AWGs) aufgebaut und kosten nur einen Bruchteil eines flexiblen WSS. Damit könnten dann aber die aktuellen Datenraten von 10Gbit/s, 40Gbit/s und 100Gbit/s pro Wellenlänge nur sehr ineffizient übertragen werden, da letztere speziell auf 50 GHz breite Kanäle ausgelegt sind.

Die Erfindung sieht daher vor, mit einer zweiten Mux/Demux-Filterstruktur die spektrale Zusammenstellung bzw. Aufspaltung von 50 GHz breiten Kanälen zu ermöglichen, sowie beide WDM-Signale geeignet zusammenzufassen.

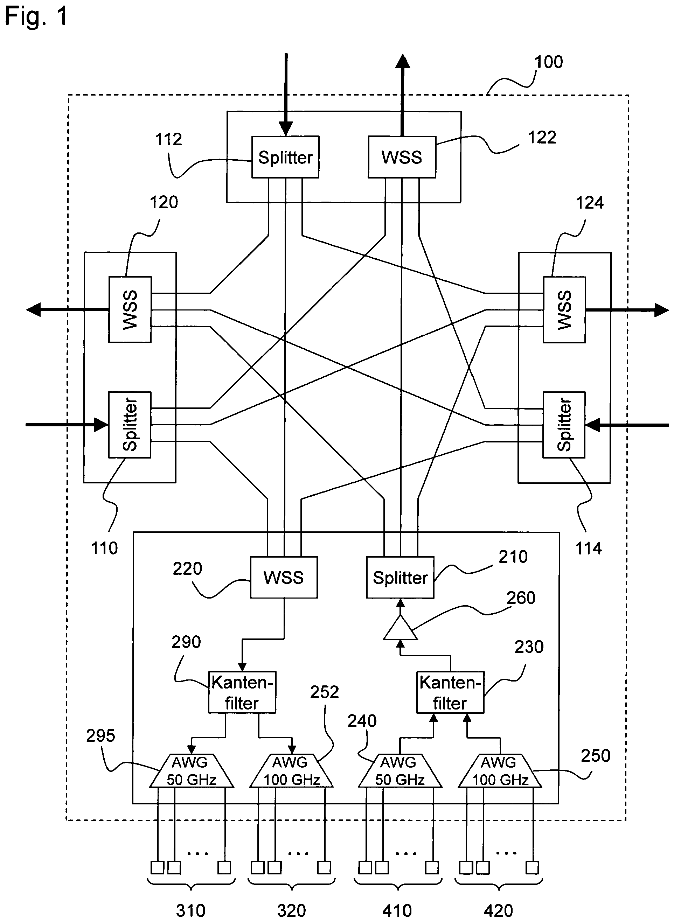

Eine entsprechende kostenreduzierte Add/drop-Architektur mit klassischen passiven Mux/Demux-Strukturen und einem aktiven 2x1 Filter ist in Fig. 1 am Beispiel eines ROADM 100 dargstellt. Der ROADM 100 umfasst im dargestellten Ausführungsbeispiel Anschlüsse für drei Glasfaserpaare zur Verbindung mit benachbarten Netzknoten eines optischen Übertragungsnetzes.

Die ankommenden optischen Signale werden jeweils mittels optischer Splitter 110, 112, bzw. 114 aufgeteilt und zu jeweils zwei der Transit-WSS 120, 122 bzw. 124, sowie zu einem Drop-Pfad zum Auskoppeln einzelner Wellenlängenkanäle weitergeleitet. Für das Einfügen von Wellenlängenkanälen ist ein Add-Pfad vorgesehen, wobei ein im Add-Pfad erzeugtes Wellenlängenmultiplexsignal mittels eines Splitters 210 aufgeteilt und an die Transit-WSS 120, 122 und 124 weitergeleitet wird.

Im Add-Pfad sind Eingangs-Ports 410 und 420 vorgesehen, wobei die Eingangs-Ports 410 für Wellenlängenkanäle mit einer Kanalbreite von 50 GHz und damit für optische Datensignale mit einer geringen Datenrate von beispielsweise maximal 100 GBit/s vorgesehen sind, während die Eingangs-Ports 420 für Wellenlängenkanäle mit einer Kanalbreite von 100 GHz und damit für optische Datensignale mit einer höheren Datenrate von beispielsweise 400 GBit/s vorgesehen sind. Die Eingangs-Ports 410 sind dementsprechend mit einem 50 GHz-AWG 240 und die Eingangs-Ports 420 mit einem 100 GHz-AWG 250 verbunden.

Analog sind im Drop-Pfad ein mit den Ausgangs-Ports 310 verbundener 50 GHz-AWG 295 und ein mit den Ausgangs-Ports 320 verbundener 100 GHz-AWG 252 vorgesehen, wobei in analoger Weise die Ausgangs-Ports 310 für Kanäle niedriger Datenrate und die Ausgangs-Ports 320 für Kanäle hoher Datenrate vorgesehen sind.

Um die Signale der AWGs 240 und 250 zusammenzufassen bzw. um Signale für die AWGs 295 und 252 bereitzustellen, könnten im Add-Pfad bzw. im Drop-Pfad ein einfacher Leistungskoppler bzw. -teiler verwendet werden.

Bei Verwendung solcher Bauteile tritt jedoch typischerweise eine Einfügedämpfung von über 3dB auf. Zudem sind diese Bauelemente starr. Ein entscheidender Aspekt ist ferner, dass es zu Fehlschaltungen kommen kann, da identische Spektralbereiche durch verschiedene Add/Drop-Ports adressiert werden könnten. Um diesen Fall zur Gewährleistung eines stabilen Netzbetriebs auszuschliessen, werden im dargestellten Ausführungsbeispiel mit einer durchstimmbaren Filterstruktur in Form eines Kantenfilterelementes 230 fehlerhaft eingekoppelte optische Leistungen in den jeweiligen spektralen Bereichen der beiden Mux/Demux-Filterstrukturen 240 und 250 bzw. 295 und 252 weggedämpft, die sonst zu einer gegenseitigen Blockierung führen würden. Dementsprechend sind die Ausgänge der AWGs 240 und 250 mit einem Kantenfilterelement 230 verbunden, und die Ausgänge des Kantenfilterelements 290 sind mit den AWGs 295 und 252 verbunden.

Im dargestellten Ausführungsbeispiel ist der Add-Pfad über einen mit dem Ausgang des Filterlemenetes 230 verbundenen Verstärker 260 und einen nachgeschalteten Splitter 210 and die Transit-WSS 120, 122 und 124 angebunden, während im Drop-Pfad zum Zuführen der gewünschten Wellenlängenkanäle ein mit dem Filterelement 290 verbundener WSS 220 vorgesehen ist.

Die Kantenfilterelemente 230 und 290 sind jeweils als flexibel durchstimmbares Kanten-Filter, im Folgenden auch als Edge-Filter bezeichnet, ausgebildet, das ein spektral adaptives Überblenden zwischen den WDM-Spektren mit 50 GHz-Raster und 100 GHz-Raster erlaubt. Damit kann bei einem spektral fehlerhaften Anschließen eines Transponders die entsprechende Einkoppelleistung weggefiltert werden. Die genaue spektrale Position des Überblendbereichs kann eingestellt werden.

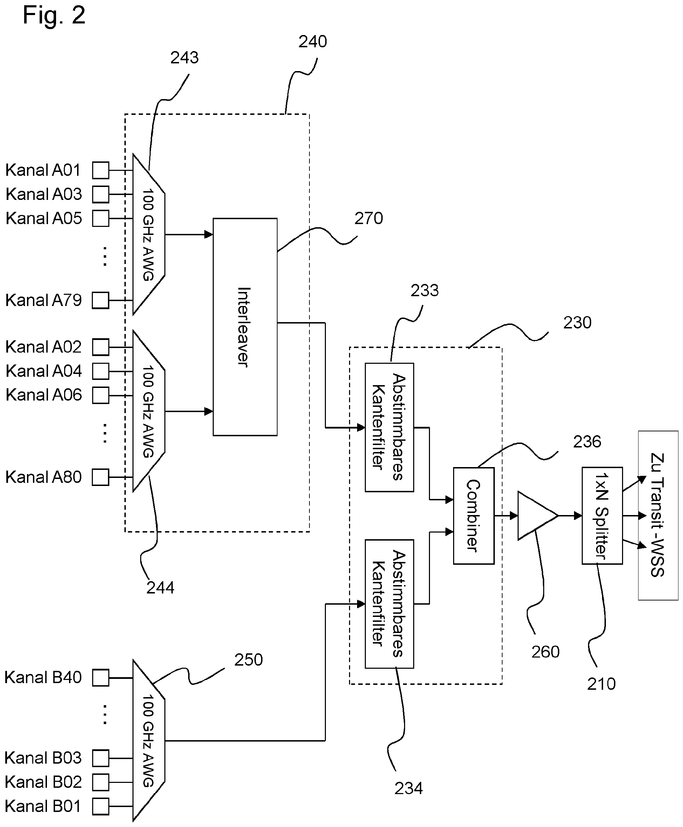

In Fig. 2 ist exemplarisch der Add-Pfad des in Fig. 1 dargestellten ROADM 100 genauer dargestellt. In dem dargestellten Ausführungsbeispiel umfassen die Eingangs-Ports 410 insgesamt 80 Ports, entsprechend der bei einem 50 GHz-Raster im C-Band üblicherweise genutzten Wellenlängenkanäle, welche vorliegend exemplarisch mit A01 bis A80 nummeriert sind, wobei im vorliegenden Beispiel die Frequenz mit steigender Nummer zunimmt, d.h. die Wellenlänge mit steigender Kanalnummer abnimmt. Die 80 Ports sind in zwei Gruppen aufgeteilt, wobei die erste Gruppe die ungeradzahligen Kanalnummern und die zweite Gruppe die geradzahligen Kanalnummern umfasst. Die erste Gruppe der Ports ist mit einem ersten 100 GHz-AWG 243 verbunden und die zweite Gruppe Ports ist mit einem zweiten 100 GHz-AWG 244 verbunden. Die Ausgänge der AWGs 243 und 244 sind mit einem optischen Interleaver-Element 270 verbunden. Das optische Interleaver-Element 270 umfasst im dargestellten Ausführungsbeispiel zwei Eingänge, von denen einer mit dem AWG 243 und der andere mit dem AWG 244 verbunden ist. Das optische Interleaver-Element 270 bewirkt ein Interleaving der den Eingangs-Ports zugeordneten Wellenlängenkanäle. Vorzugsweise umfasst das optische Interleaver-Element 270 ein oder mehrere gekoppelte asymmetrische Mach-Zehnder-Interferometer. Es ist aber auch ein anderer Aufbau, beispielsweise auf Basis doppelbrechender Kristalle oder Fabry-Perot-Interferometern denkbar.

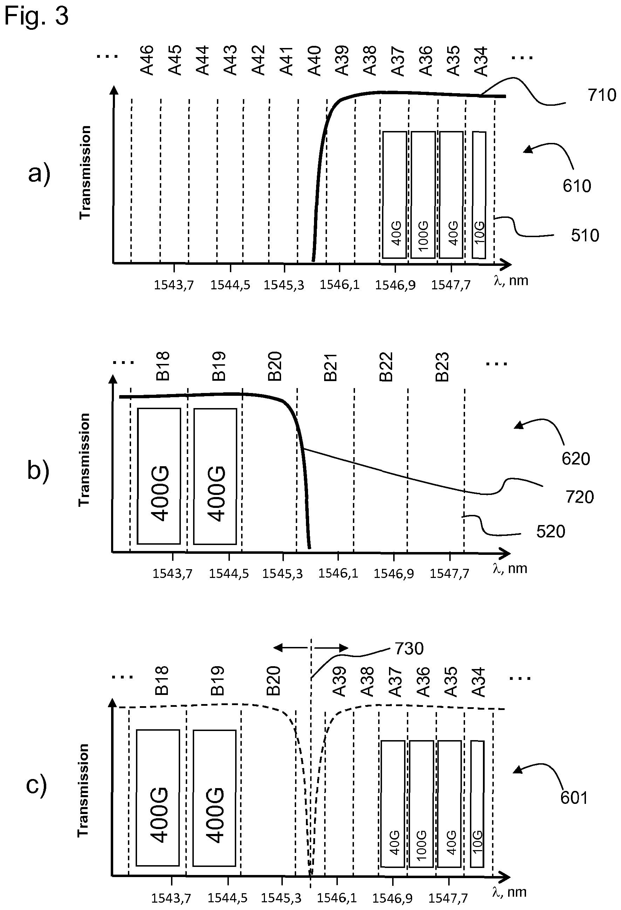

Das Ausgangssignal 610 des optischen Interleaver-Elementes 270 ist in Fig. 3 a) symbolisch dargestellt, wobei im Signal enthaltene Kanäle schematisch als Blöcke dargestellt sind, in welche jeweils die zugeordnete Datengeschwindigkeit bzw. Datenrate in GBit/s eingeschrieben ist. Die verwendeten optischen Komponenten 243, 244 und 270 entsprechen logisch einem 50 GHz-AWG. Aufgrund der einfacheren und kostengünstigeren Komponenten ist ein solcher Aufbau besonders vorteilhaft.

Die Eingangs-Ports 420 umfassen in dem dargestellten Ausführungsbeispiel insgesamt 40 Ports, entsprechend der bei einem 100 GHz-Raster im C-Band üblicherweise genutzten Wellenlängenkanäle, welche vorliegend exemplarisch mit B01 bis B40 nummeriert sind, wobei im vorliegenden Beispiel die Frequenz mit steigender Nummer abnimmt, d.h. die Wellenlänge mit steigender Kanalnummer zunimmt.

Das Ausgangsignal 620 des 100 GHz-AWG 250, an welchen die Eingangs-Ports 420 angeschlossen sind, ist in Fig. 3 b) symbolisch dargestellt, wobei wiederum im Signal enthaltene Kanäle schematisch als Blöcke dargestellt sind, in welche jeweils die zugeordnete Datenrate von 400 GBit/s eingeschrieben ist.

Der Edge-Filter-Ansatz erlaubt es, Kanäle mit der klassischen 50 GHz Bandbreite von einer Seite des Spektrums her zu bestücken, wie in Fig. 3 a) dargestellt, und die zu erwartenden 400 Gbit/s Kanäle von der anderen Seite her, wie in Fig. 3 b) dargestellt. Im dargestellten Ausführungsbeispiel ist die Kanalreihenfolge daher so gewählt, dass das Übertragungsspektrum mit steigender Kanalnummer von der Seite höherer Wellenlängen mit Kanälen einer Kanalbreite von 50 GHz und von der Seite niedriger Wellenlängen mit Kanälen einer Kanalbreite von 100 GHz gefüllt wird.

Durch das Kantenfilterelement 230 werden das Signal 610 mit Wellenlängenkanälen im 50 GHz-Raster 510 und das Signal 620 mit Wellenlängenkanälen im 100 GHz-Raster 520 zu dem in Fig. 3 c) dargestellten Wellenlängenmultiplexsignal 601 zusammengefasst, wobei das Filterelement 230 im dargestellten Ausführungsbeispiel ein erstes Kantenfilter 233 mit dem in Fig. 3 a) dargestellten Transmissionspektrum 710 und ein zweites Kantenfilter 234 mit dem in Fig. 3 b) dargestellten Transmissionspektrum 720 umfasst, wobei der Ausgang des logischen 50 GHz-AWGs 240 mit dem Kantenfilter 233 und der Ausgang des 100 GHz-AWG 250 mit dem Kantenfilter 234 verbunden ist.

Es sei angemerkt, dass in Fig. 3 a) der Transmissionsgrad des Kantenfilters 233 und in Fig. 3 b) der Transmissionsgrad des Kantenfilters 234 in willkürlichen Einheiten in Abhängigkeit der Wellenlänge aufgetragen ist und die Wellenlängenkanäle nur symbolisch in das Diagramm aufgenommen wurden. In Fig. 3 c) ist das kombinierte Transmissionsverhalten des Filterelementes 230 gestrichelt dargestellt.

Die in Fig. 3 c) durch die gestrichelte Linie 730 angedeutete Kantenfrequenz des Filterelementes 230 ist elektronisch abstimmbar, wobei eine gekoppelte Abstimmung der Kantenfilter 233 und 234 erfolgt.

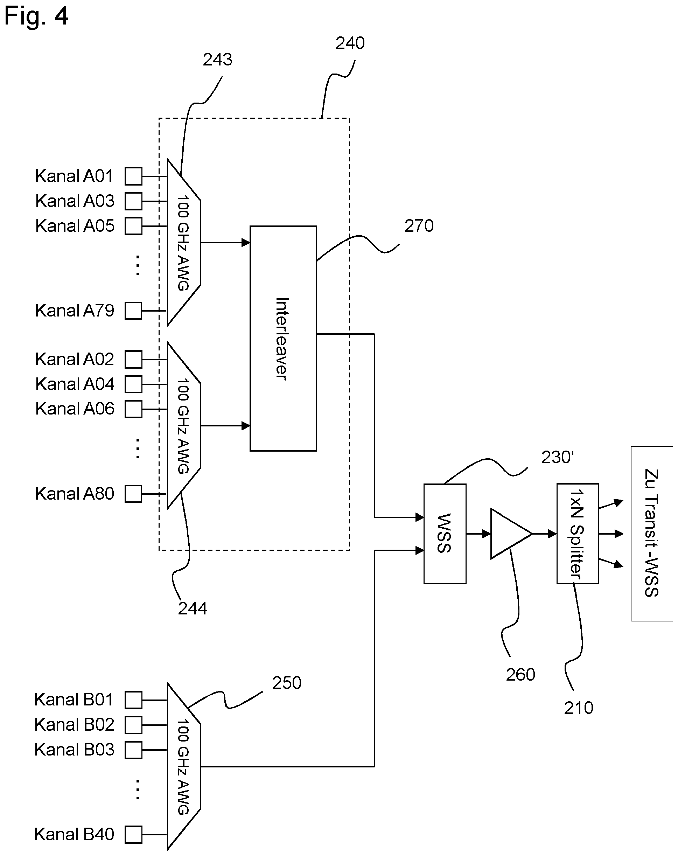

In Fig. 4 ist exemplarisch der Add-Pfad des in Fig. 1 dargestellten ROADM 100 in einer alternativen Ausführungsform genauer dargestellt. In dieser alternativen Ausführung kommt anstelle des Edge-Filterelementes 230 ein flexgrid 1x2 WSS 230' zum Einsatz. Der übrige Ausfbau entspricht dem in Fig. 2 dargestellten. Der WSS 230' erlaubt gegenüber dem preiswerteren Edge-Filterelement 230 zusätzlich ein Power-Leveling einzelner Kanäle, d.h. eine Angleichung der Signalleistung der Kanäle.

Generell ist es durch Einsatz des WSS 230' möglich, die Kanäle mit der klassischen 50 GHz Bandbreite und diejenigen für eine höhere Datenrate von 400Gbit/s mit einer 100 GHz Bandbreite im Spektrum beliebig zu verteilen. Sie müssen nicht jeweils auf einer Seite des Spektrums angeordnet werden, da der WSS beliebige Transmission jeweils getrennt für seine beiden Eingänge erzeugen kann.

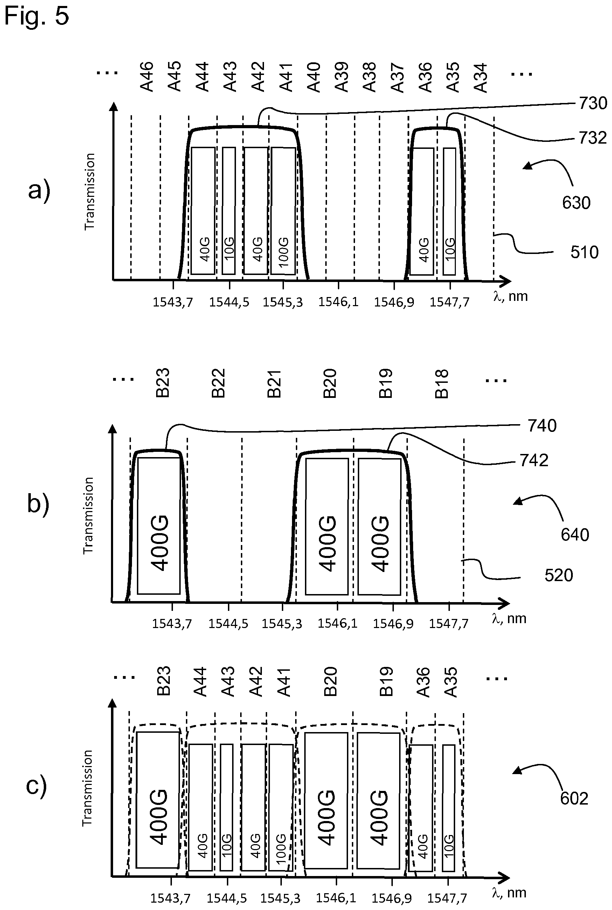

Dies ist exemplarisch in Fig. 5 dargestellt. Fig. 5a) zeigt den Transmissionsgrad des WSS 230' für dessen ersten Eingang, d.h. für die Kanäle mit 50 GHz Bandbreite und Fig. 5 b) zeigt den Transmissionsgrad des WSS 230' für dessen zweiten Eingang, d.h. für die Kanäle mit 100 GHz Bandbreite. Wiederum sind die Kanäle symbolisch als Blöcke mit eingeschriebener Datenrate dargestellt. Im dargestellten Ausführungsbeispiel ist der WSS 230' so eingestellt, dass zwei Transmissions-Schaltfenster 730 und 732 für die 50 GHz-Kanäle A35, A36 und A412 bis A44 und zwei Transmissions-Schaltfenster 740 und 742 für die 100 GHz-Kanäle B19, B20 und B23 eingestellt sind, um die Eingangssignale 630 und 640 zu dem Wellenlängenmultiplexsignal 602 zusammenzufassen.

Vorteilhaft sind mehrere spektrale Wechsel von 50 GHz nach 100 GHz und umgekehrt vorgesehen, da sich dadurch der Netzbetrieb vereinfacht und dies mit dem WSS 230' technisch problemlos machbar ist. Mit Vorteil sind jedoch nur einige wenige Wechsel vorgesehen, da bei Berücksichtigung der minimalen Schaltgranularität und maximalen Filtersteilheit eines WSS zwischen den Zuständen "voll blockierend" und "voll transparent" vorzugsweise ein gewisser spektraler Übergangsbereich vorgesehen werden sollte und somit eine allzu stark verteilte Einkopplung von Kanälen mit 50 GHz und 100 GHz Bandbreite die gesamte Transportkapazität eines Add/drop-Blocks verringern würde.

Verglichen mit einem sonst üblicherweise verwendeten 1x9 bzw. 9x1 WSS liegen die Kosten für einen 1x2 bzw. 2x1 WSS wie dem WSS 230' bei ca. der Hälfte. Für zukünftige WSS mit noch wesentlich mehr Add/drop-Ports, wie zum Beispiel mit 1x20 bzw. 1x23 Ports, ist die Kostenreduktion noch wesentlich stärker. Ein besonders Vorteil der Erfindung besteht daher darin, dass im Add/Drop-Pfad auf den Einsatz von WSS mit 9, 20 oder 23 Ports verzichtet werden kann.

Um eine langfristige Kompatibilität mit elastischen Flexgrid-Ansätzen zu garantieren, ist vorteilhaft vorgesehen, dass der WSS 230' als flexgrid-WSS ausgebildet ist, zudem die Zusatzkosten für die Flexgrid-Eigenschaft gegenüber einem WSS mit starrem Grid derzeit bei nur etwa 20 bis 30 % liegen.

Durch die Erfindung können Transportsysteme mit festem 50 GHz Kanalraster mit vergleichsweise einfachen Mitteln in die Lage versetzt werden, auch für den Transport von 400 Gbit/s Wellenlängen gerüstet zu sein. Die Lösung ist kosteneffizient und muss nicht vollständig vom ersten Betriebstag an implementiert werden. Vielmehr können bei Bedarf einzelne Subsysteme nachgerüstet werden. Wenn beispielsweise heute noch kein Bedarf für 400 Gbit/s Datenraten besteht, kann der entsprechende 100 GHz AWG erst später nachgerüstet werden. Generell ist es auch denkbar, dass die Systeme zum Beispiel durch einen 200 GHz AWG auch auf die Verwendung von Wellenlängenkanälen mit Datenraten von 1 Tbit/s erweitert werden. Der Netzbetreiber hat zudem auch die Möglichkeit, längerfristig das gesamte C-Band mit 80 herkömmlichen 50 GHz breiten Kanälen zu bestücken, ohne jemals auf 400 Gbit/s bzw. 1 Tbit/s zu erweitern.

Die Erfindung schlägt somit eine Zusammenstellung einfacher optischer Bauelemente vor, um damit verglichen mit den heute angedachten hochflexiblen Add/drop-Ports eine deutlich kostengünstigere Realisierung von Add/drop-Ports für Datenraten von 400 Gbit/s zeitgleich und zusammen mit den heute verfügbaren Datenraten von 10 bis 100 Gbit/s zu ermöglichen. Speziell das Vorsehen eines Ports für den Anschluss eines 100 GHz AWGs ermöglicht einen "reibungsfreien Upgrade" bestehender 50 GHz-Systeme auf 100 GHz Kanalbandbreite für zukünftige höhere Datenraten.

Durch die Erfindung werden sogenannte colored & directionless Add/drop-Ports bereitgestellt, wobei aber auf besonders kostengünstige Weise bereits verschieden breite Ports im Sinne unterschiedlicher Datenbandbreiten bereitgestellt werden, was so gesehen einen Schritt hin zu spektral elastischen Ports, d.h. hin zu sogenannten colorless & directionless Add/drop-Ports darstellt. Somit ist die Erfindung besonders geeignet, einen Migrationspfad für bestehende optische Übertragungsnetze hin zu höheren Datenraten zu ermöglichen.

## Patentansprüche

1. Verfahren zum Multiplexen eines optischen Wellenlängenmultiplexsignals (601, 602) in einem Add-Pfad eines rekonfigurierbaren optischen Add/Drop-Multiplexers (100), umfassend folgende Schritte:
- Bereitstellen einer Mehrzahl erster optischer Datensignale, deren Wellenlängen jeweils einem von ersten Wellenlängenkanälen (A01-A80) mit Kanalabständen gemäß eines vorgegebenen ersten Wellenlängenrasters (510) entsprechen,
- Bereitstellen einer Mehrzahl zweiter optischer Datensignale, deren Wellenlängen jeweils einem von zweiten Wellenlängenkanälen (B01-B20) mit Kanalabständen gemäß eines vorgegebenen zweiten, vom ersten unterschiedlichen Wellenlängenrasters (520) entsprechen,
- Kombinieren der ersten optischen Datensignale zu einem ersten Teil-Multiplexsignal (610, 630) mittels eines ersten passiven optischen Elementes (240),
- Kombinieren der zweiten optischen Datensignale zu einem zweiten Teil-Multiplexsignal (620, 640) mittels eines zweiten passiven optischen Elementes (250),
**gekennzeichnet durch** folgenden Schritt:
- Kombinieren des ersten und zweiten Teil-Multiplexsignals zu einem optischen Wellenlängenmultiplexsignal (601, 602) mittels eines abstimmbaren Kantenfilterelementes (230), wobei das abstimmbare Kantenfilterelement dazu ausgebildet ist, Signalanteile eines ersten optischen Eingangssignals oberhalb einer elektronisch einstellbaren Kantenfrequenz (730) mit Signalanteilen eines zweiten optischen Eingangssignals unterhalb der Kantenfrequenz (730) zu einem optischen Ausgangssignal zu kombinieren, und wobei das Wellenlängenmultiplexsignal (601, 602) in wenigstens einem ersten Wellenlängenbereich erste Wellenlängenkanäle (A01-A80) mit Kanalabständen gemäß des vorgegebenen ersten Wellenlängenrasters (510) und in wenigstens einem zweiten Wellenlängenbereich zweite Wellenlängenkanäle (B01-B40) mit Kanalabständen gemäß des vorgegebenen zweiten, vom ersten unterschiedlichen Wellenlängenrasters (520) umfasst.

2. Verfahren zum Demultiplexen eines optischen Wellenlängenmultiplexsignals (601, 602) in einem Drop-Pfad eines rekonfigurierbaren optischen Add/Drop-Multiplexers (100), umfassend:
- Bereitstellen eines optischen Wellenlängenmultiplexsignals (601, 602), welches in wenigstens einem ersten Wellenlängenbereich erste Wellenlängenkanäle (A01-A80) mit Kanalabständen gemäß eines vorgegebenen ersten Wellenlängenrasters (510) und in wenigstens einem zweiten Wellenlängenbereich zweite Wellenlängenkanäle (B01-B40) mit Kanalabständen gemäß eines vorgegebenen zweiten, vom ersten unterschiedlichen Wellenlängenrasters (520) umfasst, **gekennzeichnet durch** folgende Schritte:
- Aufteilen des optischen Wellenlängenmultiplexsignals (601, 602) in ein erstes und ein zweites Teil-Multiplexsignal mittels eines abstimmbaren Kantenfilterelementes (230), wobei das abstimmbare Kantenfilterelement dazu ausgebildet ist, Signalanteile eines optischen Eingangssignals oberhalb einer elektronisch einstellbaren Kantenfrequenz (730) in ein erstes optisches Ausgangssignal und unterhalb der Kantenfrequenz (730) in ein zweites optisches Ausgangssignal aufzuteilen,
- Aufteilen des ersten Teil-Multiplexsignals in eine Mehrzahl erster optischer Datensignale mittels eines ersten passiven optischen Elementes (295), wobei die Wellenlänge jedes der ersten optischen Datensignale jeweils einem der ersten Wellenlängenkanäle (A01-A80) entspricht,
- Aufteilen des zweiten Teil-Multiplexsignals in eine Mehrzahl zweiter optischer Datensignale mittels eines zweiten passiven optischen Elementes (252), wobei die Wellenlänge jedes der zweiten optischen Datensignale jeweils einem der zweiten Wellenlängenkanäle (A01-A80) entspricht.

3. Verfahren nach Anspruch 1, wobei das Kombinieren der ersten optischen Datensignale zu einem ersten Teil-Multiplexsignal die Schritte umfasst:
- Bereitstellen der ersten optischen Datensignale als eine erste (A01, A03, ...) und zweite (A02, A04, ...) Gruppe optischer Datensignale,
- Kombinieren der optischen Datensignale der ersten Gruppe zu einem ersten Gruppen-Multiplexsignal,
- Kombinieren der optischen Datensignale der zweiten Gruppe zu einem zweiten Gruppen-Multiplexsignal, wobei
- das erste und zweite Gruppen-Multiplexsignal Wellenlängenkanäle mit Kanalabständen gemäß des vorgegebenen zweiten Wellenlängenrasters (520) umfassen, und
- Kombinieren des ersten und zweiten Gruppen-Multiplexsignals zu dem ersten Teil-Multiplexsignal (610) mittels eines optischen Interleaver-Elementes (270), welches eine Verschränkung der Wellenlängenkanäle des ersten und zweiten Gruppen-Multiplexsignals bewirkt.

4. Verfahren nach einem der Ansprüche 1 bis 3, wobei im Wellenlängenmultiplexsignal (601) die ersten Wellenlängenkanäle (A01-A39) in einem ersten zusammenhängenden Wellenlängenbereich und die zweiten Wellenlängenkanäle (B01-B20) in einem zweiten zusammenhängenden, mit dem ersten zusammenhängenden Wellenlängenbereich nicht überlappenden, Wellenlängenbereich angeordnet sind.

5. Optisches Netzelement (100) zum Einsatz in einem im Wellenlängen-Multiplexbetrieb betriebenen optischen Übertragungsnetz, ausgebildet als rekonfigurierbarer optischer Add/Drop-Multiplexer, wobei
das optische Netzelement ein erstes passives optisches Element (240) zum Kombinieren einer Mehrzahl erster optischer Datensignale zu einem ersten Teil-Multiplexsignal (610, 630), insbesondere ausgebildet als passiver optischer Multiplexer mit einem Kanalabstand gemäß dem ersten Wellenlängenraster (510), und ein zweites passives optisches Element (250) zum Kombinieren einer Mehrzahl zweiter optischer Datensignale zu einem zweiten Teil-Multiplexsignal (620, 640), insbesondere ausgebildet als passiver optischer Multiplexer mit einem Kanalabstand gemäß dem zweiten Wellenlängenraster (520), umfasst,
**dadurch gekennzeichnet, dass**
das optische Netzelement zum Einsatz beim Kombinieren des ersten und zweiten Teil-Multiplexsignals zu einem optischen Wellenlängenmultiplexsignal (601, 602) ein abstimmbares Kantenfilterelement (230) umfasst, wobei das abstimmbare Kantenfilterelement (230) dazu ausgebildet ist, Signalanteile eines ersten optischen Eingangssignals oberhalb einer elektronisch einstellbaren Kantenfrequenz (730) mit Signalanteilen eines zweiten optischen Eingangssignals unterhalb der Kantenfrequenz (730) zu einem optischen Ausgangssignal zu kombinieren, und wobei das Wellenlängenmultiplexsignal (601, 602) in wenigstens einem ersten Wellenlängenbereich erste Wellenlängenkanäle (A01-A80) mit Kanalabständen gemäß des vorgegebenen ersten Wellenlängenrasters (510) und in wenigstens einem zweiten Wellenlängenbereich zweite Wellenlängenkanäle (B01-B40) mit Kanalabständen gemäß des vorgegebenen zweiten, vom ersten unterschiedlichen Wellenlängenrasters (520) umfasst.

6. Optisches Netzelement (100) zum Einsatz in einem im Wellenlängen-Multiplexbetrieb betriebenen optischen Übertragungsnetz, ausgebildet als rekonfigurierbarer optischer Add/Drop-Multiplexer, dazu ausgebildet,
in einem Drop-Pfad des Add/Drop-Multiplexers ein optisches Wellenlängenmultiplexsignal (601, 602), welches in wenigstens einem ersten Wellenlängenbereich erste Wellenlängenkanäle (A01-A80) mit Kanalabständen gemäß eines vorgegebenen ersten Wellenlängenrasters (510) und in wenigstens einem zweiten Wellenlängenbereich zweite Wellenlängenkanäle (B01-B40) mit Kanalabständen gemäß eines vorgegebenen zweiten, vom ersten unterschiedlichen Wellenlängenrasters (520) umfasst, in separate, jeweils einem der ersten und zweiten Wellenlängenkanäle entsprechenden optischen Datensignale aufzuteilen,
**dadurch gekennzeichnet, dass**
das optische Netzelement zum Einsatz beim Aufteilen des optischen Wellenlängenmultiplexsignals (601, 602) in separate optische Datensignale ein abstimmbares Kantenfilterelement (230) umfasst, wobei das abstimmbare Kantenfilterelement dazu ausgebildet ist, Signalanteile eines optischen Eingangssignals oberhalb einer elektronisch einstellbaren Kantenfrequenz (730) in ein erstes optisches Ausgangssignal und unterhalb der Kantenfrequenz (730) in ein zweites optisches Ausgangssignal aufzuteilen, und wobei das optische Netzelement ein erstes optisches Element (295) zum Aufteilen eines ersten Teil-Multiplexsignals in eine Mehrzahl erster optischer Datensignale, insbesondere ausgebildet als passiver optischer Multiplexer mit einem Kanalabstand gemäß dem ersten Wellenlängenraster (510), und ein zweites optisches Element (252) zum Aufteilen eines zweiten Teil-Multiplexsignals in eine Mehrzahl zweiter optischer Datensignale, insbesondere ausgebildet als passiver optischer Multiplexer mit einem Kanalabstand gemäß dem zweiten Wellenlängenraster (520), umfasst, und wobei das abstimmbare Kantenfilterelement zum Aufteilen des Wellenlängenmultiplexsignals (601, 602) in das erste und zweite Teil-Multiplexsignal ausgebildet ist.

7. Optisches Netzelement nach Anspruch 5, wobei das erste optische Element (240) umfasst:
- einen ersten (243) und einen zweiten (244) passiven optischen Multiplexer mit einem Kanalabstand gemäß dem zweiten Wellenlängenraster (520), und
- ein mit den Ausgängen des ersten und zweiten passiven optischen Multiplexers verbundenes optisches Interleaver-Element (270), dazu ausgebildet, die von dem ersten (243) und zweiten (244) passiven optischen Multiplexer erzeugten Signale zu dem ersten Teil-Multiplexsignal (610) zu kombinieren, wobei eine Verschränkung der in den Eingangssignalen enthaltenen Wellenlängenkanäle erfolgt.

8. Optisches Übertragungsnetz mit einer Mehrzahl von Netzknoten, welche mittels optischer Übertragungsstrecken miteinander verbunden sind, ausgebildet für einen Wellenlängen-Multiplexbetrieb, wobei wenigstens ein Netzknoten ein optisches Netzelement gemäß einem der Ansprüche 5 bis 7 umfasst.

## Claims

1. A method of multiplexing an optical wavelength-division multiplex signal (601, 602) in an add path of a reconfigurable optical add/drop multiplexer (100), comprising the steps of
- providing a plurality of first optical data signals, whose wavelengths each correspond to one of first wavelength channels (A01-A80) having channel spacings according to a predetermined first wavelength grid (510), - providing a plurality of second optical data signals, whose wavelengths each correspond to one of second wavelength channels (B01-B20) having channel spacings according to a predetermined second wavelength grid (520) which is different from the first,
- combining the first optical data signals into a first partial multiplex signal (610, 630) using a first passive optical element (240),
- combining the second optical data signals into a second partial multiplex signal (620, 640) using a second passive optical element (250), **characterized by** the following step:
- combining the first and second partial multiplex signals to form an optical wavelength-division multiplex signal (601, 602) using a tunable edge filter element (230), wherein the tunable edge filter element is designed to combine signal components of a first optical input signal above an electronically adjustable edge frequency (730) with signal components of a second optical input signal below the edge frequency (730) to form an optical output signal, and wherein the wavelength-division multiplex signal (601, 602) in at least one first wavelength range comprises first wavelength channels (A01- A80) with channel spacings according to the predetermined first wavelength grid (510) and in at least one second wavelength range comprises second wavelength channels (B01-B40) with channel spacings according to the predetermined second wavelength grid (520) which is different from the first.

2. A method of demultiplexing an optical wavelength-division multiplex signal (601, 602) in a drop path of a reconfigurable optical add/drop multiplexer (100), comprising:
- providing an optical wavelength-division multiplex signal (601, 602) comprising in at least a first wavelength range first wavelength channels (A01-A80) with channel spacings according to a predetermined first wavelength grid (510) and in at least a second wavelength range second wavelength channels (B01-B40) with channel spacings according to a predetermined second wavelength grid (520) which is different from the first, **characterized by** the following steps:
- splitting the optical wavelength-division multiplex signal (601, 602) into a first and a second partial multiplex signal using a tunable edge filter element (230), wherein the tunable edge filter element is designed to split signal components of an optical input signal above an electronically adjustable edge frequency (730) into a first optical output signal and below the edge frequency (730) into a second optical output signal,
- splitting the first partial multiplex signal into a plurality of first optical data signals using a first passive optical element (295), wherein the wavelength of each of the first optical data signals corresponds to one of the first wavelength channels (A01-A80),
- splitting the second partial multiplex signal into a plurality of second optical data signals using a second passive optical element (252), wherein the wavelength of each of the second optical data signals corresponds to a respective one of the second wavelength channels (A01-A80).

3. The method of claim 1, wherein combining the first optical data signals into a first partial multiplex signal comprises the steps of:
- providing the first optical data signals as a first (A01, A03, ...) and second (A02, A04, ...) group of optical data signals,
- combining the optical data signals of the first group into a first group multiplex signal,
- combining the optical data signals of the second group into a second group multiplex signal, wherein
- the first and second group multiplex signals comprise wavelength channels having channel spacings according to the predetermined second wavelength grid (520), and
- combining the first and second group multiplex signals into the first partial multiplex signal (610) using an optical interleaver element (270) that causes interleaving of the wavelength channels of the first and second group multiplex signals.

4. The method of any one of claims 1 to 3, wherein in the wavelength-division multiplex signal (601), the first wavelength channels (A01-A39) are arranged in a first contiguous wavelength range and the second wavelength channels (B01-B20) are arranged in a second contiguous wavelength range, wherein the second contiguous wavelength range does not overlap with the first contiguous wavelength range.

5. Optical network element (100) for use in an optical transmission network operated in wavelength-division multiplex mode, designed as a reconfigurable optical add/drop multiplexer, the optical network element comprising a first passive optical element (240) for combining a plurality of first optical data signals into a first partial multiplex signal (610, 630), in particular designed as a passive optical multiplexer with a channel spacing according to the first wavelength grid (510), and a second passive optical element (250) for combining a plurality of second optical data signals into a second partial multiplex signal (620, 640), in particular designed as a passive optical multiplexer with a channel spacing according to the second wavelength grid (520), **characterized in that** the optical network element comprises a tunable edge filter element (230) for use in combining the first and second partial multiplex signals into an optical wavelength-division multiplex signal (601, 602), the tunable edge filter element (230) being designed to combine signal components of a first optical input signal above an electronically adjustable edge frequency (730) with signal components of a second optical input signal below the edge frequency (730) to form an optical output signal, and wherein the wavelength-division multiplex signal (601, 602) in at least a first wavelength range comprises first wavelength channels (A01-A80) with channel spacings according to the predetermined first wavelength grid (510) and in at least a second wavelength range comprises second wavelength channels (B01-B40) with channel spacings according to the predetermined second wavelength grid (510) which is different from the first.

6. Optical network element (100) for use in an optical transmission network operated in wavelength-division multiplex mode, designed as a reconfigurable optical add/drop multiplexer, designed to split in a drop path of the add/drop multiplexer an optical wavelength-division multiplex signal (601, 602), which comprises, in at least a first wavelength range, first wavelength channels (A01-A80) with channel spacings according to a predetermined first wavelength grid (510) and, in at least a second wavelength range, second wavelength channels (B01-B40) with channel spacings according to a predetermined second wavelength grid (520) which is different from the first, into separate optical data signals each corresponding to one of the first and second wavelength channels,
**characterized in that**
the optical network element comprises a tunable edge filter element (230) for use in splitting the optical wavelength-division multiplex signal (601, 602) into separate optical data signals, wherein the tunable edge filter element is designed to split signal portions of an optical input signal above an electronically adjustable edge frequency (730) into a first optical output signal and below the edge frequency (730) into a second optical output signal, and wherein the optical network element comprises a first optical element (295) for splitting a first partial multiplex signal into a plurality of first optical data signals, in particular designed as a passive optical multiplexer with a channel spacing according to the first wavelength grid (510), and a second optical element (252) for splitting a second partial multiplex signal into a plurality of second optical data signals, in particular formed as a passive optical multiplexer with a channel spacing according to the second wavelength grid (520), and wherein the tunable edge filter element is designed for splitting the wavelength-division multiplex signal (601, 602) into the first and second partial multiplex signals.

7. The optical network element of claim 5, wherein the first optical element (240) comprises:
- a first (243) and a second (244) passive optical multiplexer having a channel spacing according to the second wavelength grid (520), and
- an optical interleaver element (270) connected to the outputs of the first and second passive optical multiplexers and adapted to combine the signals generated by the first (243) and second (244) passive optical multiplexers into the first partial multiplex signal (610), wherein interleaving of the wavelength channels contained in the input signals occurs.

8. An optical transmission network comprising a plurality of network nodes interconnected by optical transmission links, configured for wavelength-division multiplex operation, wherein at least one network node comprises an optical network element according to any one of claims 5 to 7.

## Revendications

1. Procédé de multiplexage d'un signal optique de multiplexage en longueur d'onde (601, 602) dans un chemin d'insertion d'un multiplexeur optique d'insertion/extraction reconfigurable (100), comprenant les étapes suivantes:
- fournir une pluralité de premiers signaux de données optiques dont les longueurs d'onde correspondent chacune à l'un des premiers canaux de longueur d'onde (A01-A80) avec des espacements de canaux selon une première grille de longueurs d'onde prédéterminée (510),
- fournir une pluralité de deuxièmes signaux de données optiques dont les longueurs d'onde correspondent chacune à l'un des deuxièmes canaux de longueur d'onde (B01-B20) avec des espacements de canaux selon une deuxième grille de longueurs d'onde (520) prédéterminée, différente de la première,
- combiner les premiers signaux de données optiques en un premier signal de multiplexage partiel (610, 630) au moyen d'un premier élément optique passif (240),
- combiner les deuxièmes signaux de données optiques en un deuxième signal de multiplexage partiel (620, 640) au moyen d'un deuxième élément optique passif (250),
**caractérisé par** l'étape suivante:
- combiner les premier et deuxième signaux de multiplexage partiels en un signal optique de multiplexage en longueur d'onde (601, 602) au moyen d'un élément de filtre de bord réglable (230), l'élément de filtre de bord réglable étant conçu pour combiner des parties de signal d'un premier signal d'entrée optique au-dessus d'une fréquence de bord réglable électroniquement (730) avec des parties de signal d'un deuxième signal d'entrée optique au-dessous de la fréquence de bord (730) en un signal de sortie optique, et le signal de multiplexage en longueur d'onde (601, 602) comprenant, dans au moins une première plage de longueurs d'onde, des premiers canaux de longueur d'onde (A01-A80) avec des espacements de canaux selon la première grille de longueurs d'onde (510) prédéfinie et, dans au moins une deuxième plage de longueurs d'onde, des deuxièmes canaux de longueur d'onde (B01-B40) avec des espacements de canaux selon la deuxième grille de longueurs d'onde (520) prédéfinie, différente de la première.

2. Procédé de démultiplexage d'un signal optique de multiplexage en longueurs d'onde (601, 602) dans un chemin d'extraction d'un multiplexeur optique d'insertion/extraction reconfigurable (100), comprenant:
- fournir un signal optique de multiplexage en longueur d'onde (601, 602) comprenant, dans au moins une première plage de longueurs d'onde, des premiers canaux de longueur d'onde (A01-A80) avec des espacements de canaux selon une première grille de longueurs d'onde prédéterminée (510) et, dans au moins une deuxième plage de longueurs d'onde, des deuxièmes canaux de longueur d'onde (B01-B40) avec des espacements de canaux selon une deuxième grille de longueurs d'onde prédéterminée (520), différente de la première, **caractérisé par** les étapes suivantes:
- diviser le signal de multiplexage en longueur d'onde optique (601, 602) en un premier et un deuxième signal de multiplexage partiel au moyen d'un élément de filtre de bord réglable (230), l'élément de filtre de bord réglable étant conçu pour diviser des parties de signal d'un signal d'entrée optique au-dessus d'une fréquence de bord réglable électroniquement (730) en un premier signal de sortie optique et au-dessous de la fréquence de bord (730) en un deuxième signal de sortie optique,
- diviser le premier signal de multiplexage partiel en une pluralité de premiers signaux de données optiques au moyen d'un premier élément optique passif (295), la longueur d'onde de chacun des premiers signaux de données optiques correspondant respectivement à l'un des premiers canaux de longueur d'onde (A01-A80),
- diviser le second signal de multiplexage partiel en une pluralité de seconds signaux de données optiques au moyen d'un second élément optique passif (252), la longueur d'onde de chacun des seconds signaux de données optiques correspondant respectivement à l'un des seconds canaux de longueur d'onde (A01-A80).

3. Procédé selon la revendication 1, dans lequel la combinaison des premiers signaux optiques de données en un premier signal de multiplexage partiel comprend les étapes suivantes:
- fournir les premiers signaux de données optiques sous la forme d'un premier (A01, A03, ...) et d'un deuxième (A02, A04, ...) groupes de signaux de données optiques,
- combiner les signaux de données optiques du premier groupe en un premier signal de multiplexage de groupe,
- combiner les signaux de données optiques du deuxième groupe en un deuxième signal de multiplexage de groupe, dans lequel
- les premier et deuxième signaux de multiplexage de groupe comprennent des canaux de longueur d'onde ayant des espacements de canaux selon la deuxième grille de longueurs d'onde prédéterminée (520), et
- combiner les premier et deuxième signaux de multiplexage de groupe en le premier signal de multiplexage partiel (610) au moyen d'un élément d'entrelacement optique (270) qui provoque un entrelacement des canaux de longueur d'onde des premier et deuxième signaux de multiplexage de groupe.

4. Procédé selon l'une des revendications 1 à 3, dans lequel, dans le signal de multiplexage en longueur d'onde (601), les premiers canaux de longueur d'onde (A01-A39) sont disposés dans une première plage de longueurs d'onde contiguës et les deuxièmes canaux de longueur d'onde (B01-B20) sont disposés dans une deuxième plage de longueurs d'onde contiguës qui ne chevauchent pas la première plage de longueurs d'onde contiguës.

5. Elément de réseau optique (100) destiné à être utilisé dans un réseau de transmission optique fonctionnant en multiplexage en longueur d'onde, conçu comme un multiplexeur optique d'insertion/extraction reconfigurable, l'élément de réseau optique comprenant un premier élément optique passif (240) pour combiner une pluralité de premiers signaux de données optiques en un premier signal de multiplexage partiel (610, 630), en particulier formé comme un multiplexeur optique passif avec un espacement de canaux selon la première grille de longueurs d'onde (510), et un deuxième élément optique passif (250) pour combiner une pluralité de deuxièmes signaux de données optiques en un deuxième signal de multiplexage partiel (620, 640), en particulier formé comme un multiplexeur optique passif avec un espacement de canaux selon la deuxième grille de longueurs d'onde (520), **caractérisé en ce que** l'élément de réseau optique comprend un élément de filtre de bord réglable (230) destiné à être utilisé pour combiner les premier et deuxième signaux de multiplexage partiel en un signal de multiplexage en longueur d'onde optique (601, 602), l'élément de filtre de bord réglable (230) étant conçu pour combiner des parties de signal d'un premier signal d'entrée optique au-dessus d'une fréquence de bord réglable électroniquement (730) avec des parties de signal d'un deuxième signal d'entrée optique au-dessous de la fréquence de bord (730) en un signal de sortie optique, et le signal de multiplexage en longueur d'onde (601, 602) comprenant, dans au moins une première plage de longueurs d'onde, des premiers canaux de longueur d'onde (A01-A80) avec des espacements de canaux selon la première grille de longueurs d'onde (510) prédéterminée et, dans au moins une deuxième plage de longueurs d'onde, des deuxièmes canaux de longueur d'onde (B01-B40) avec des espacements de canaux selon la deuxième grille de longueurs d'onde (520) prédéterminée, différente de la première.

6. Elément de réseau optique (100) destiné à être utilisé dans un réseau de transmission optique fonctionnant en multiplexage en longueur d'onde, conçu comme un multiplexeur optique d'insertion/extraction reconfigurable, conçu pour diviser, dans un chemin d'extraction du multiplexeur d'insertion/extraction, un signal optique de multiplexage en longueur d'onde (601, 602), lequel comprend, dans au moins une première plage de longueurs d'onde, des premiers canaux de longueurs d'onde (A01-A80) avec des espacements de canaux selon une première grille de longueurs d'onde (510) prédéfinie et, dans au moins une deuxième plage de longueurs d'onde, des deuxièmes canaux de longueurs d'onde (B01-B40) avec des espacements de canaux selon une deuxième grille de longueurs d'onde prédéfinie, en signaux de données optiques séparés correspondant respectivement à l'un des premier et second canaux de longueur d'onde, **caractérisé en ce que** l'élément de réseau optique comprend un élément de filtre de bord réglable (230) destiné à être utilisé pour diviser le signal optique de multiplexage en longueur d'onde (601, 602) en signaux de données optiques séparés, dans lequel l'élément de filtre de bord réglable est conçu pour diviser des parties de signal d'un signal optique d'entrée au-dessus d'une fréquence de bord réglable électroniquement (730) en un premier signal optique de sortie et au-dessous de la fréquence de bord (730) en un deuxième signal optique de sortie, et dans lequel l'élément de réseau optique comprend un premier élément optique (295) pour diviser un premier signal de multiplexage partiel en une pluralité de premiers signaux de données optiques, en particulier formé comme un multiplexeur optique passif avec un espacement de canaux selon la première grille de longueurs d'onde (510), et un deuxième élément optique (252) pour diviser un deuxième signal de multiplexage partiel en une pluralité de deuxièmes signaux de données optiques, en particulier formé comme un multiplexeur optique passif avec un espacement de canaux selon la deuxième grille de longueurs d'onde (520), et dans lequel l'élément de filtre de bord réglable est formé pour diviser le signal de multiplexage en longueur d'onde (601, 602) en les premier et deuxième signaux de multiplexage partiels.

7. Élément de réseau optique selon la revendication 5, dans lequel le premier élément optique (240) comprend :
- un premier (243) et un deuxième (244) multiplexeurs optiques passifs ayant un espacement de canaux selon la deuxième grille de longueurs d'onde (520), et
- un élément optique d'entrelacement (270) connecté aux sorties des premier et deuxième multiplexeurs optiques passifs, adapté pour combiner les signaux générés par les premier (243) et deuxième (244) multiplexeurs optiques passifs en le premier signal de multiplexage partiel (610), en réalisant un entrelacement des canaux de longueur d'onde contenus dans les signaux d'entrée.

8. Réseau de transmission optique comprenant une pluralité de noeuds de réseau qui sont interconnectés par des lignes de transmission optique, conçu pour un fonctionnement en multiplexage de longueurs d'onde, au moins un noeud de réseau comprenant un élément de réseau optique selon l'une des revendications 5 à 7.
